# EUROPÄISCHE PATENTSCHRIFT

(11) **EP 2 042 701 B1**
(45) Veröffentlichungstag und Bekanntmachung des Hinweises auf die Patenterteilung: **30.06.2010**
(21) Anmeldenummer: 08015744.9
(22) Anmeldetag: 06.09.2008
(51) Int. Cl.: F01N 13/18, F16L 27/10, F16L 27/111, F16L 51/02, F16L 55/033

(54) **Dämpfungsanordnung**
Dampening assembly
Dispositif d'amortissement

(30) Priorität: 27.09.2007 DE 202007013515 U
(43) Veröffentlichungstag der Anmeldung: 01.04.2009
(73) Patentinhaber: Witzenmann GmbH, 75175 Pforzheim (DE)
(72) Erfinder: Hornung, Jörg, 75248 Ölbronn-Dürrn (DE); Martinek, Frank, 71665 Vaihingen/Enz (DE); Pluschke, Michael, 75305 Neuenbürg (DE)
(74) Vertreter: Lemcke, Brommer & Partner

(56) Entgegenhaltungen:
- EP-A- 0 458 011
- EP-A- 0 657 683
- EP-A- 0 709 558
- EP-A- 0 747 582
- EP-A- 0 875 669
- EP-A- 1 010 872
- EP-A- 1 241 389
- EP-A- 1 783 416
- EP-A- 1 818 591
- DE-A1- 3 343 967
- DE-A1- 3 742 195
- DE-A1- 10 201 801
- DE-A1- 19 548 123
- DE-U1- 20 023 409
- DE-U1- 29 509 434
- DE-U1- 29 713 484

## Beschreibung

Die Erfindung betrifft eine Dämpfungsanordnung nach dem Oberbegriff des Patentanspruchs 1 für eine Abgasanlage, insbesondere für Kraftfahrzeuge, mit einem metallischen Balg zum Verbinden von Leitungsteilen der Abgasanlage, der zumindest abschnittsweise mit einem Gestricke- oder Drahtpressmaterial umgeben ist.

Zur Schwingungsdämpfung von metallischen Bälgen, die in einer Abgasanlage, insbesondere für Kraftfahrzeuge, zum Verbinden von Leitungsteilen der Abgasanlage eingesetzt sind, ist bekannt, den Balg zumindest abschnittsweise mit einem Gestricke- oder Drahtpressmaterial zu umgeben, das relativ zu dem Balg beweglich ist und somit durch Reibung an der Balgoberfläche eine schwingungsdämpfende Wirkung auf den Balg ausübt.

Dabei ist insbesondere als nachteilig anzusehen, dass durch die Wellenform des Balgs oftmals nur eine unzureichende Reibung bzw. Dämpfung erreicht wird, was durch Fertigungstoleranzen des Balgs noch verstärkt wird.

Die EP 0 709 558 A1 offenbart einen metallischen Balg, der von einem Geflechtschlauch aus Metall umgeben ist. Zwischen dem Balg und dem Geflechtschlauch ist ein vorzugsweise federndes Abstandselement angeordnet.

Aus der EP 0 458 011 A1 ist ein Leitungselement bekannt, welches gemäß den dortigen Figuren 5 und 6 einen Ringwellschlauch umfassen kann, der zur Längsabstützung mit einem Geflechtsmantel umgeben ist. Zwischen dem Ringwellschlauch und dem Geflechtsmantel ist ein Dämpfungskissen vorgesehen, welches als Metallfasergewirk ausgebildet sein kann.

Die EP 0 657 683 A2 offenbart die Anordnung wenigstens eines ringförmigen schwingungsdämpfenden Elements aus Drahtpressmaterial zwischen einem Balg und einem äußeren Geflechtschlauch.

Die EP 1 010 872 A2 offenbart einen Flexschlauch, bei dem zwischen einem Wellenbalg und einer Außenumflechtung aus Metall ein Drahtgestrick angeordnet sein kann.

In der DE 195 48 123 A1 ist ein flexibles Leitungselement in der Abgasanlage einer Brennkraftmaschine beschrieben, bei dem zwischen einem Wellschlauch und einem dem Wellschlauch umgebenden Außengeflecht ein Dämpfungsmaterial eingesetzt ist, welches vorteilhafter Weise aus einem Drahtgestrick besteht.

Der Erfindung liegt die Aufgabe zugrunde, eine Dämpfungsanordnung der eingangs genannten Art dahingehend weiterzuentwickeln, dass eine verbesserte Dämpfung erzielt wird.

Die Erfindung löst die Aufgabe mittels einer Dämpfungsanordnung mit den Merkmalen des Patentanspruchs 1. Vorteilhafte Weiterbildungen der erfindungsgemäßen Dämpfungsanordnung sind Gegenstand von Unteransprüchen, deren Wortlaut hiermit durch ausdrückliche Bezugnahme in die Beschreibung aufgenommen wird, um unnötige Textwiederholungen zu vermeiden.

Erfindungsgemäß ist eine Dämpfungsanordnung für eine Abgasanlage, insbesondere für Kraftfahrzeuge, mit einem metallischen Balg zum Verbinden von Leitungsteilen der Abgasanlage, der zumindest abschnittsweise mit einem Gestricke- oder Drahtpressmaterial umgeben ist, dadurch gekennzeichnet, dass zwischen Balg und dem Gestricke- oder Drahtpressmaterial wenigstens eine reibungserhöhende Zwischenschicht vorgesehen ist.

Nach einem Grundgedanken der vorliegenden Erfindung ist also zwischen dem Balg einerseits und dem Gestricke- oder Drahtpressmaterial andererseits wenigstens eine reibungserhöhende Zwischenschicht vorgesehen, so dass aufgrund der verstärkten Reibung eine verbesserte Bedämpfung des Balgs möglich ist.

Bei einer ersten Ausgestaltung der erfindungsgemäßen Dämpfungsanordnung kann die Zwischenschicht als Zwischenlage aus einem hochtemperaturfähigen metallischen oder nichtmetallischen Gewebe ausgebildet sein, durch dessen Verwendung sich eine Erhöhung der Reibungswerte erreichen lässt. Als nichtmetallische Werkstoffe kommen insbesondere Aluminiumsilikat oder Kohlefasern in Betracht.

Bei entsprechenden Ausgestaltungen der erfindungsgemäßen Dämpfungsanordnung hat demnach das Gestricke oder Gestrickematerial die Funktion der Fixierung des Gewebes auf dem Balg, ohne dieses bzw. diesen hinsichtlich der relativen Beweglichkeit einzuschränken. Die Gewebe-Zwischenlage hat ihrerseits die Funktion, den Balg durch Reibung zu bedämpfen.

Bei einer anderen Ausgestaltung der erfindungsgemäßen Dämpfungsanordnung kann die Zwischenschicht als Zwischenlage aus wenigstens einer Anordnung von Zungenelementen gebildet sein, wobei die Zungenelemente mittels eines ringförmigen Befestigungselements auf einer Oberfläche des Balgs beweglich gehalten sind. Anstatt also den Balg vollständig mit einem Gestricke zu umgeben, sehen entsprechende Ausgestaltungen der erfindungsgemäßen Dämpfungsanordnung vor, eine Anzahl von Zungenelementen mittels ringförmiger Befestigungselemente beweglich auf der Oberfläche des Balgs anzuordnen. Dabei übernehmen die Zungenelemente die vorstehend beschriebene Funktion des Gewebes, das heißt sie dienen zur Reibungsdämpfung.

Bei den Zungenelementen handelt es sich um Verschleißteile, die beispielsweise aus Metall, insbesondere Kupfer oder Messing oder aus Kunststoff bestehen können. Bei einer Ausgestaltung der erfindungsgemäßen Dämpfungsanordnung ist das Befestigungselement für die Zungenelemente als Ring aus Drahtpressmaterial ausgebildet.

Durch das Vorsehen mehrerer derartiger Anordnungen aus Zungenelementen und entsprechenden Befestigungselementen lassen sich bestimmte Stellen des Balgs gezielt bedämpfen.

Weitere Ausgestaltungen der erfindungsgemäßen Dämpfungsanordnung sehen vor, dass die Zwischenlage gegenüber dem Gestricke- oder Drahtpressmaterial und/oder gegenüber dem Balg beweglich gehalten ist. Auf diese Weise lassen sich verschiedene Reibungspaarungen zum Bedämpfen des Balgs realisieren. Alternativ kann jedoch auch vorgesehen sein, dass die Zwischenlage sowohl an dem Balg als auch an dem Gestricke- oder Drahtpressmaterial fixiert ist, so dass die Dämpfung des Balgs maßgeblich durch innere Reibungseffekte des Zwischenlagenmaterials bestimmt ist.

Alternativ kann zusätzlich zu dem bislang beschriebenen Ausgestaltungen der erfindungsgemäßen Dämpfungsanordnung auch vorgesehen sein, dass die Zwischenschicht nicht als separate Zwischenlage sondern durch eine Oberflächenbehandlung des Balgs hergestellt ist, wofür sich insbesondere eine Strahlbehandlung mittels Glaskugeln anbietet. Diese führt zu einem Aufrauen der Balgoberfläche, was seinerseits mit einer Erhöhung der Reibungswerte verbunden ist. Vorteilhafterweise erfolgt die Oberflächenbehandlung des Balgs vor dem Ausbilden der Balgwellen.

Wie bereits erwähnt, kann ein derartig oberflächenbehandelter Balg, der somit selbst die erfindungsgemäße Zwischenschicht zur Verfügung stellt, mit dem weiter oben ausführlich beschriebenen Ausgestaltungen kombiniert werden. So kann beispielsweise ein entsprechend oberflächenbehandelter Balg unter Zwischenlegen eines hochtemperaturfähigen Gewebes vollständig mit einem Gestrickematerial umgeben sein. Weiterhin kann ein entsprechend oberflächenbehandelter Balg auch durch Vorsehen von Anordnungen aus Fixierungs-und Zungenelementen zusätzlich bedämpft sein.

Weitere Eigenschaften und Vorteile der vorliegenden Erfindung ergeben sich aus der nachfolgenden Beschreibung von Ausführungsbeispielen anhand der Zeichnung. Es zeigt:
- Figur 1: einen Längsschnitt einer ersten Ausgestaltung der erfindungsgemäßen Dämpfungsanordnung;
- Figur 2: einen Längsschnitt einer zweiten Ausgestaltung der erfindungsgemäßen Dämpfungsanordnung; und
- Figur 3: eine Seitenansicht der Ausgestaltung gemäß Figur 2.

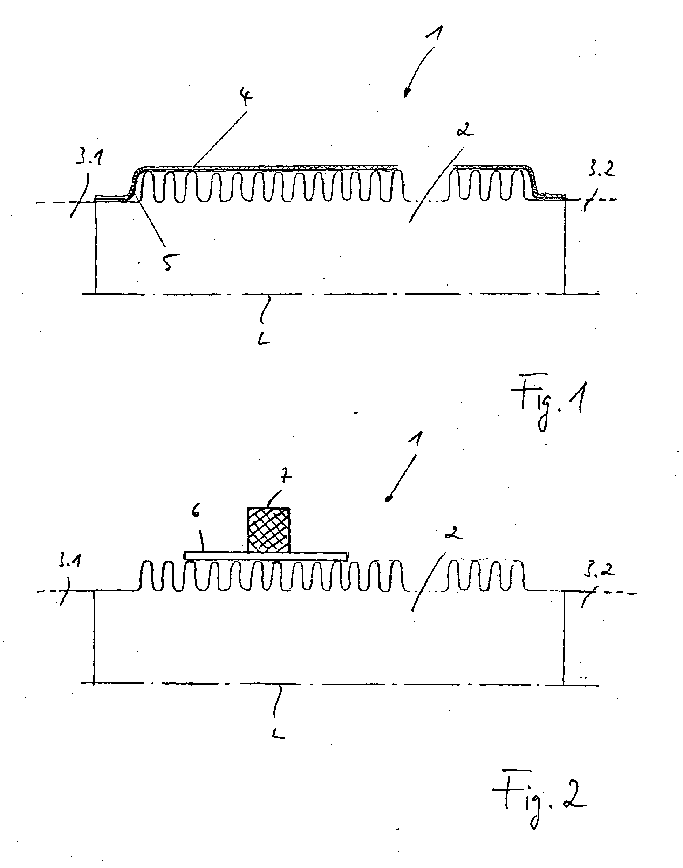

Figur 1 zeigt eine Dämpfungsanordnung 1 für eine Abgasanlage, insbesondere für Kraftfahrzeuge. Die Dämpfungsanordnung 1 weist einen metallischen Balg 2 auf, der als Rohrteil 3.1, 3.2 ausgebildete Leitungsteile der Abgasanlage verbindet. Der Balg 2 ist mit einem Gestricke 4 vollständig umgeben, wobei zwischen Balg 2 und Gestricke 4 eine reibungserhöhende Zwischenschicht 5 aus einem hochtemperaturbeständigen Gewebematerial angeordnet ist. Das Gestricke 4 und die Zwischenschicht bzw. das Gewebe 5 können jeweils entweder in einem metallischen oder in einem nichtmetallischen Werkstoff ausgebildet sein, sofern diese für eine Verwendung beim Betrieb der Dämpfungsanordnung 1 bzw. der Abgasanlage geeignet sind.

Das Gestricke 4 dient zur Fixierung des Gewebes 5 auf dem Balg 2, ohne dass es hinsichtlich des Gewebes 5 gegenüber dem Balg 2 oder dem Gestricke 4 zu einer Bewegungsbeschränkung kommt. Dagegen hat das Gewebe 5 die Funktion, durch Reibung am Balg 2 einerseits sowie an dem Gestricke 4 andererseits für eine Bedämpfung des Balgs 2 beim Betrieb der Abgasanlage zu sorgen. Dementsprechend kommen für den Balg 2, das Gestricke 4 und das Gewebe 5 insbesondere solche Werkstoffe zum Einsatz, für die sich eine zum Bedämpfen des Balgs 2 günstige Reibpaarung ergibt.

Alternativ kann das Gewebe 5 relativ zu dem Gestricke 4 festgelegt sein, so dass eine dämpfende Reibung nur zwischen dem Balg 2 und dem Gewebe 5 erfolgt. Alternativ oder zusätzlich kann eine dämpfende Reibwirkung auch innerhalb des Gewebes 5 stattfinden, welches entsprechend auch bezüglich des Balgs 2 festgelegt sein kann.

Als nichtmetallische Werkstoffe zur Herstellung des Gestrickes 4 und/oder des Gewebes 5 kommen insbesondere Aluminiumsilikat oder Kohlefasern in Betracht.

Bei der Ausgestaltung gemäß Figur 1 sind das Gestricke 4 und das Gewebe 5 in den Bereichen des Balgs 2, das heißt im Übergang zu den Leitungsteilen 3.1, 3.2 gemeinsam mittels geeigneter Befestigungselemente festgelegt, was in Figur 1 nicht explizit dargestellt ist.

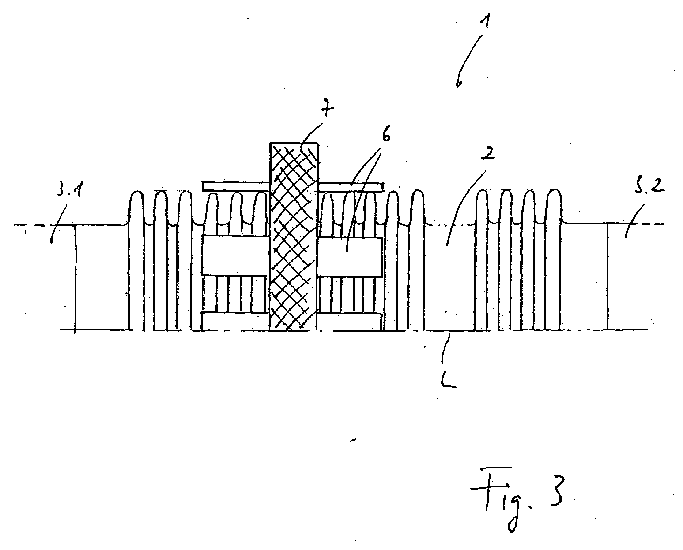

Figur 2 zeigt eine weitere Ausgestaltung der erfindungsgemäßen Dämpfungsanordnung 1. Dabei sind gleiche Elemente in den Figuren jeweils mit denselben Bezugszeichen versehen. Anstelle der Kombination aus Gestricke und Gewebe-Zwischenlage (vgl. Figur 1) kommt bei der Ausgestaltung gemäß Figur 2 zum Bedämpfen des Balgs 2 eine Anordnung aus Zungenelementen 6 zum Einsatz, die bei Orientierung jeweils parallel zu einer Längsachse L der Dämpfungsanordnung 1 über den Umfang des Balgs 2 beabstandet angeordnet und mittels eines äußeren Fixierungselements in Form eines Drahtpressrings 7 auf dem Balg 2 beweglich gehalten sind. Für eine detaillierte Darstellung der Anordnung der Zungenelemente 6 auf dem Balg 2 und relativ zueinander sei darüber hinaus auf die Seitenansicht gemäß Figur 3 verwiesen. Die Zungenelemente 6 können und einem metallischen oder einem nichtmetallischen Werkstoff bestehen, der vorteilhafterweise weicher als das Material des Balgs 2 ist, so dass die Zungenelemente auf dem Balg 2 reiben können (und dabei gegebenenfalls verschleißen), ohne diesen zu beschädigen. Beispielsweise können die Zungenelemente 2 aus Kupfer, Messing oder einem Kunststoffmaterial bestehen.

Durch Vorsehen und entsprechendes Platzieren mehrerer derartiger Anordnungen aus Zungenelementen 6 und Fixierungselement 7 lassen sich eine Mehrzahl von Schwingungsstellen des Balgs 2 gezielt bedämpfen, wobei die gesamte Reibungsoberfläche (der Zungenelemente 6 am Balg 2) beispielsweise ca. 20 % der gesamten Balgoberfläche ausmachen kann.

In Abwandlung der Ausgestaltung gemäß Figur 2 und Figur 3 ist es im Rahmen der vorliegenden Erfindung auch möglich, das Fixierungselement 7 in Längsrichtung L breiter auszubilden und anstelle der Anordnung von Zungenelementen 6 einen Gewebeabschnitt analog zur Ausgestaltung der Figur 1 im Bereich des Fixierungselements 7 vorzusehen, wobei der Gewebeabschnitt durch das Fixierungselement 7 auf dem Balg 2 gehalten ist. Dementsprechend entfällt bei einer solchen Ausgestaltung die vollständige Umstrickung des Balgs 2, wie sie in Figur 1 dargestellt ist. Dies kann entsprechende Kostenvorteile nach sich ziehen, wobei wiederum eine gezielte Bedämpfung des Balgs 2, beispielsweise an bestimmten Resonanzstellen, möglich ist.

Weiterhin ist es in Abwandlung der bislang erläuterten Ausgestaltungen der erfindungsgemäßen Dämpfungsanordnung grundsätzlich auch möglich, die Ausgestaltungen gemäß der Figur 1 einerseits und den Figuren 2 und 3 andererseits zu kombinieren, das heißt eine Gewebezwischenlage analog zur Figur 1 in Kombination mit Anordnungen aus Fixierungselementen 7 und Zungenelementen 6 gemäß den Figuren 2 und 3 vorzusehen.

Wie in der Darstellung in den Figuren 1 bis 3 nicht explizit zu entnehmen ist, kann alternativ oder zusätzlich noch eine reibungserhöhende Behandlung der Oberfläche des Balgs 2 durchgeführt werden. Dies geschieht beispielsweise durch Strahlen der Balgoberfläche mit Glaskugeln oder anderen geeigneten Materialien, um die Balgoberfläche aufzurauen, wodurch sich ein erhöhter Reibungskoeffizient einstellt. Vorteilhafterweise erfolgt die Behandlung der Balgoberfläche noch vor dem Ausformen der Balgwellen, um eine gleichmäßige Oberflächenbehandlung zu gewährleisten.

Die vorstehend beschriebene Behandlung der Balgoberfläche kann - wie gesagt - zusätzlich zu den Ausgestaltungen gemäß der Figuren 1 bis 3 eingesetzt werden, um die Reibung zum Bedämpfen des Balgs 2 zusätzlich zu erhöhen. Jedoch ist es im Rahmen der vorliegenden Erfindung auch möglich, gänzlich auf das Vorsehen von Zwischenlagen, wie dem Gewebe 5 (Figur 1) oder den Zungenelementen 6 (Figur 2 und 3) zu verzichten, und allein die behandelte Balgoberfläche als reibungserhöhende Zwischenschicht zwischen dem Balg 2 an sich und einem dem Balg 2 zumindest abschnittsweise umgebenden Gestricke- oder Drahtpressmaterial vorzusehen.

## Patentansprüche

1. Dämpfungsanordnung (1) für eine Abgasanlage, insbesondere für Kraftfahrzeuge, mit einem metallischen Balg (2) zum Verbinden von Leitungsteilen (3.1, 3.2) der Abgasanlage, der zumindest abschnittsweise mit einem Gestricke- oder Drahtpressmaterial (4, 7) umgeben ist, **dadurch gekennzeichnet, dass** zwischen Balg (2) und dem Gestricke- oder Drahtpressmaterial (4, 7) wenigstens eine reibungserhöhende Zwischenschicht (5, 6) vorgesehen ist.

2. Dämpfungsanordnung (1) nach Anspruch 1, **dadurch gekennzeichnet, dass** die Zwischenschicht als Zwischenlage aus einem hochtemperaturfähigen metallischen oder nichtmetallischen Gewebe (5) ausgebildet ist.

3. Dämpfungsanordnung (1) nach Anspruch 1, **dadurch gekennzeichnet, dass** die Zwischenschicht als Zwischenlage aus wenigstens einer Anordnung von Zungenelementen (6) gebildet ist, die mittels eines Befestigungselements (7) auf einer Oberfläche des Balgs (2) beweglich gehalten sind.

4. Dämpfungsanordnung (1) nach Anspruch 3, **dadurch gekennzeichnet, dass** die Zungenelemente (6) zueinander parallel und in Längsrichtung (L) des Balgs (2) angeordnet sind.

5. Dämpfungsanordnung (1) nach Anspruch 3 oder 4, **dadurch gekennzeichnet, dass** die Zungenelemente (6) aus Metall, insbesondere Kupfer oder Messing, oder aus Kunststoff bestehen.

6. Dämpfungsanordnung (1) nach mindestens einem der Ansprüche 3 bis 5, **dadurch gekennzeichnet, dass** das Befestigungselement (7) als ein Ring aus dem Drahtpressmaterial ausgebildet ist.

7. Dämpfungsanordnung (1) nach mindestens einem der Ansprüche 2 bis 6, **dadurch gekennzeichnet, dass** die Zwischenlage (5, 6) durch das Gestricke- oder Drahtpressmaterial (4, 7) ohne Bewegungsbeschränkung gegenüber dem Balg (2) auf diesem gehalten ist.

8. Dämpfungsanordnung (1) nach mindestens einem der Ansprüche 2 bis 6, **dadurch gekennzeichnet, dass** die Zwischenlage (5) auf dem Balg fixiert und gegenüber dem Gestricke- oder Drahtpressmaterial (4, 7) beweglich angeordnet ist.

9. Dämpfungsanordnung (1) nach mindestens einem der Ansprüche 2 bis 6, **dadurch gekennzeichnet, dass** die Zwischenlage (5) an dem Balg (2) und an dem Gestricke- oder Drahtpressmaterial (4, 7) fixiert ist.

10. Dämpfungsanordnung (1) nach mindestens einem der Ansprüche 1 bis 9, **dadurch gekennzeichnet, dass** die Zwischenschicht durch eine Behandlung einer Oberfläche des Balgs (2) hergestellt ist.

11. Dämpfungsanordnung (1) nach Anspruch 10, **dadurch gekennzeichnet, dass** die Behandlung ein Strahlen der Balgoberfläche ist, insbesondere mittels Glaskugeln.

12. Dämpfungsanordnung (1) nach Anspruch 10 oder 11, **dadurch gekennzeichnet, dass** durch die Oberflächenbehandlung des Balgs (2) der Reibungskoeffizient für eine reibende Wechselwirkung mit dem Gestricke- oder Drahtpressmaterial (4, 7) und/oder mit wenigstens einer weiteren Zwischenschicht (5, 6), insbesondere bei einer Ausbildung der Zwischenschicht gemäß mindestens einem der Ansprüche 2 bis 9, erhöht ist.

13. Dämpfungsanordnung (1) nach mindestens einem der Ansprüche 1 bis 12, **dadurch gekennzeichnet, dass** das Gestricke (4) aus einem metallischen oder einem nichtmetallischen Material hergestellt ist.

## Claims

1. Damping arrangement (1) for an exhaust system, especially for motor vehicles, having a metal bellows (2) for connecting duct parts (3.1, 3.2) of the exhaust system, which bellows is surrounded, at least over sections, by a knitted or compressed wire material (4, 7), **characterised in that** between the bellows (2) and the knitted or compressed wire material (4, 7) there is provided at least one friction-increasing intermediate layer (5, 6).

2. Damping arrangement (1) according to claim 1, **characterised in that** the intermediate layer is in the form of an interlayer of a high-temperature-compatible metallic or non-metallic woven fabric (5).

3. Damping arrangement (1) according to claim 1, **characterised in that** the intermediate layer is in the form of an interlayer comprising at least one arrangement of tongue elements (6) which are held by means of a fastening element (7) so as to be movable on a surface of the bellows (2).

4. Damping arrangement (1) according to claim 3, **characterised in that** the tongue elements (6) are arranged parallel to one another and in the longitudinal direction (L) of the bellows (2).

5. Damping arrangement (1) according to claim 3 or 4, **characterised in that** the tongue elements (6) consist of metal, especially copper or brass, or of plastics.

6. Damping arrangement (1) according to at least one of claims 3 to 5, **characterised in that** the fastening element (7) is in the form of a ring made of the compressed wire material.

7. Damping arrangement (1) according to at least one of claims 2 to 6, **characterised in that** the interlayer (5, 6) is held on the bellows (2) by the knitted or compressed wire material (4, 7) without limiting movement with respect to the bellows (2).

8. Damping arrangement (1) according to at least one of claims 2 to 6, **characterised in that** the interlayer (5) is fixed on the bellows and arranged to be movable with respect to the knitted or compressed wire material (4, 7).

9. Damping arrangement (1) according to at least one of claims 2 to 6, **characterised in that** the interlayer (5) is fixed on the bellows (2) and on the knitted or compressed wire material (4, 7).

10. Damping arrangement (1) according to at least one of claims 1 to 9, **characterised in that** the intermediate layer is produced by treatment of a surface of the bellows (2).

11. Damping arrangement (1) according to claim 10, **characterised in that** the treatment is blasting of the bellows surface, especially using glass beads.

12. Damping arrangement (1) according to claim 10 or 11, **characterised in that** as a result of the surface-treatment of the bellows (2) the coefficient of friction for frictional interaction with the knitted or compressed wire material (4, 7) and/or with at least one further intermediate layer (5, 6), especially in a form of the intermediate layer in accordance with at least one of claims 2 to 9, is increased.

13. Damping arrangement (1) according to at least one of claims 1 to 12, **characterised in that** the knitted fabric (4) is produced from a metallic or non-metallic material.

## Revendications

1. Dispositif d'amortissement (1) destiné à un système d'échappement, notamment pour véhicules automobiles, muni d'un soufflet métallique (2) qui est conçu pour relier des tronçons de conduits (3.1, 3.2) dudit système d'échappement et est entouré, au moins par zones, d'un matériau (4, 7) en tricot ou en fil métallique comprimé, **caractérisé par le fait qu'**au moins une couche intercalaire (5, 6), accroissant le frottement, est prévue entre ledit soufflet (2) et ledit matériau (4, 7) en tricot ou en fil métallique comprimé.

2. Dispositif d'amortissement (1) selon la revendication 1, **caractérisé par le fait que** la couche intercalaire revêt la forme d'une strate intermédiaire en un tissu (5) métallique ou non métallique, résistant à des températures élevées.

3. Dispositif d'amortissement (1) selon la revendication 1, **caractérisé par le fait que** la couche intercalaire est formée d'une strate intermédiaire au moins constituée d'un ensemble d'éléments (6) de type languettes retenus sur une surface du soufflet (2), avec faculté de mouvement, au moyen d'un élément de fixation (7).

4. Dispositif d'amortissement (1) selon la revendication 3, **caractérisé par le fait que** les éléments (6) de type languettes sont agencés parallèlement les uns aux autres, et dans la direction longitudinale (L) du soufflet (2).

5. Dispositif d'amortissement (1) selon la revendication 3 ou 4, **caractérisé par le fait que** les éléments (6) de type languettes consistent en un métal, en particulier du cuivre ou du laiton, ou en une matière plastique.

6. Dispositif d'amortissement (1) selon au moins l'une des revendications 3 à 5, **caractérisé par le fait que** l'élément de fixation (7) est réalisé sous la forme d'une bague constituée du matériau en fil métallique comprimé.

7. Dispositif d'amortissement (1) selon au moins l'une des revendications 2 à 6, **caractérisé par le fait que** la couche intercalaire (5, 6) est retenue sur le soufflet (2) par le matériau (4, 7) en tricot ou en fil métallique comprimé, sans aucune restriction de mouvement vis-à-vis dudit soufflet.

8. Dispositif d'amortissement (1) selon au moins l'une des revendications 2 à 6, **caractérisé par le fait que** la couche intercalaire (5) est verrouillée à demeure sur le soufflet et est agencée, de façon mobile, par rapport au matériau (4, 7) en tricot ou en fil métallique comprimé.

9. Dispositif d'amortissement (1) selon au moins l'une des revendications 2 à 6, **caractérisé par le fait que** la couche intercalaire (5) est verrouillée à demeure sur le soufflet (2), et sur le matériau (4, 7) en tricot ou en fil métallique comprimé.

10. Dispositif d'amortissement (1) selon au moins l'une des revendications 1 à 9, **caractérisé par le fait que** la couche intercalaire est produite par un traitement opéré sur une surface du soufflet (2).

11. Dispositif d'amortissement (1) selon la revendication 10, **caractérisé par le fait que** le traitement réside dans un grenaillage de la surface du soufflet, notamment au moyen de billes de verre.

12. Dispositif d'amortissement (1) selon la revendication 10 ou 11, **caractérisé par le fait que** le traitement de la surface du soufflet (2) a pour effet d'accroître le coefficient de frottement, en vue d'une interaction par frottement avec le matériau (4, 7) en tricot ou en fil métallique comprimé, et/ou avec au moins une couche intercalaire additionnelle (5, 6), en particulier lorsque la couche intercalaire est réalisée conformément à au moins l'une des revendications 2 à 9.

13. Dispositif d'amortissement (1) selon au moins l'une des revendications 1 à 12, **caractérisé par le fait que** le tricot (4) est fabriqué en un matériau métallique ou en un matériau non métallique.
